Europäisches Patentamt

European Patent Office

Office européen des brevets

(11) Veröffentlichungsnummer: **0 309 692**
**B1**

(12) **EUROPÄISCHE PATENTSCHRIFT**

(45) Veröffentlichungstag der Patentschrift:
**25.04.90**

(21) Anmeldenummer: **88112846.6**

(22) Anmeldetag: **06.08.88**

(51) Int. Cl.⁴: **B62D 33/06**

(54) **Kleiderschrank in Schlafkabinen-Fahrerhäusern.**

(30) Priorität: **29.09.87 DE 3732770**

(43) Veröffentlichungstag der Anmeldung:
**05.04.89 Patentblatt 89/14**

(45) Bekanntmachung des Hinweises auf die Patenterteilung:
**25.04.90 Patentblatt 90/17**

(84) Benannte Vertragsstaaten:
**DE FR GB IT NL SE**

(56) Entgegenhaltungen:
**DE-A- 2 617 941**
**DE-A- 2 951 980**

(73) Patentinhaber: **MAN Nutzfahrzeuge Aktiengesellschaft,
Dachauer Strasse 667 Postfach 50 06 20,
D-8000 München 50(DE)**

(72) Erfinder: **Schmidt, Werner, Vogelloh 54,
D-8000 München 50(DE)**
Erfinder: **Watzek, Gerhard, Eduard-Spranger-Strasse 34,
D-8000 München 45(DE)**
Erfinder: **Geyer, Wolfgang, Karlingerstrasse 59,
D-8000 München 50(DE)**

## Beschreibung

Die Erfindung bezieht sich auf ein Lkw-Fahrerhaus mit im Rückraum angeordneter Schlafkabine, die eine klappbare Unterliege und eine klappbare Oberliege aufweist, wobei seitlich der Liegen direkt an diese anschließend, ein Kleiderbehälter angeordnet ist (siehe DE-A 2 951 980).

Es ist ein bekanntes Problem, daß die in den Schlafkabinen von Lkw-Fahrerhäusern installierten Liegen für großgewachsene Personen in ihrer Längserstreckung nicht ausreichen, zumindest muß die Einschränkung einer eingeknickten Körper- oder Kniehaltung in Kauf genommen werden, was langfristig gesehen anatomisch ungünstig ist und gesundheitliche Schäden hervorrufen kann. Außerdem wird so die Schlafgüte wesentlich beeinträchtigt, wodurch der Fahrer oder Beifahrer für die nachfolgende, einen längeren Zeitraum umfassende Aktivphase am Steuer nicht optimal vorbereitet ist. Andererseits ist es auch bekannt, daß die Unterbringungsmöglichkeiten von Kleidungsstücken in Lkw-Fahrerhäusern eher dürftig sind, was insbesondere bei Mehrtagesfahrten zu einem zusätzlichen Problem wird.

Der Erfindung liegt die Aufgabe zugrunde, optimale Reisebedingungen für Fahrer und Beifahrer von Lkw's zu schaffen.

Dies wird erfindungsgemäß dadurch erreicht, daß der Kleiderbehälter aus einem Grundkörper und einem diesen von oben verschließenden, aufklappbaren Deckel besteht, wobei der Deckel im geschlossenen Zustand, nahtlos an das Fußende der oberen Liege anschließend, angeordnet ist. Solcherart wird einerseits das Fußende der oberen Liege wesentlich verlängert, so daß auch großgewachsene Personen sich voll ausstrecken und ihre bequemste Schlafstellung einnehmen können. Mittels der erfindungsgemäßen Einrichtung wird aber noch ein weiterer erheblicher Vorteil erzielt, nämlich die Schaffung einer großvolumigen Einheit für die Unterbringung von Kleidungsstücken. Es ist hier besonders die Vorteilskombination hervorzuheben.

Nach einem weiteren Merkmal der Erfindung weist der Deckel im geschlossenen Zustand eine zur oberen Liege planparallele Fläche mit einer sich daran anschließenden, nach unten weisenden Schräge auf, die eine partielle Voröffnung des Kleiderbehälters verschließt. Auf diese Weise kann der Fahrersitz in seine rückwärtigste Position geschoben werden, ohne daß Kompromisse eingegangen werden müssen. Weiterhin ist durch die dreidimensionale Öffnung des Kleiderbehälters ein problemloses Ein- und Aushängen der Kleider möglich. Darüber hinaus vermittelt die Schräge ein aufgelockertes Design in der Fahrerkabine. In weiterer Ausgestaltung der Erfindung ist der Deckel durch Übertotpunktanordnung einer Feder, z.B. einer Gasfeder, mit geringem Kraftaufwand in Offen- oder Geschlossenstellung bringbar. Dies gestattet, ohne Anwendung von größerer Muskelkraft, sogar aus der Fahrerposition, ein problemloses Öffnen und Schließen des Deckels.

Indem die Deckeloberfläche gepolstert ist, ist auch im Fußbereich des schlafenden Fahrers oder Beifahrers für eine angenehme Bettung gesorgt.

Die Ansprüche 7 und 8 stellen alternative bauliche Ausführungsformen des Kleiderbehälters dar.

Der Kleiderbehälter ist mit nur zwei Schrauben oder Schnellverschlüssen an der Rückwand der Fahrerkabine befestigbar, so daß ein blitzschneller Ein- oder Ausbau, je nach Reisenotwendigkeit oder Reiseziel, vorgenommen werden kann.

Nach einem wesentlichen Merkmal der Erfindung ist der Kleiderbehälter mit Tragegriffen versehen und abschließbar gestaltet. Solcherart kann der Kleiderbehälter auch als tragbarer Koffer fungieren, wenn Fahrer oder Beifahrer z.B. ihn zur Übernachtung mit ins Hotelzimmer nehmen wollen. Dabei ist auch die Abschließbarkeit, vor allem in südlichen Ländern, von großem Vorteil.

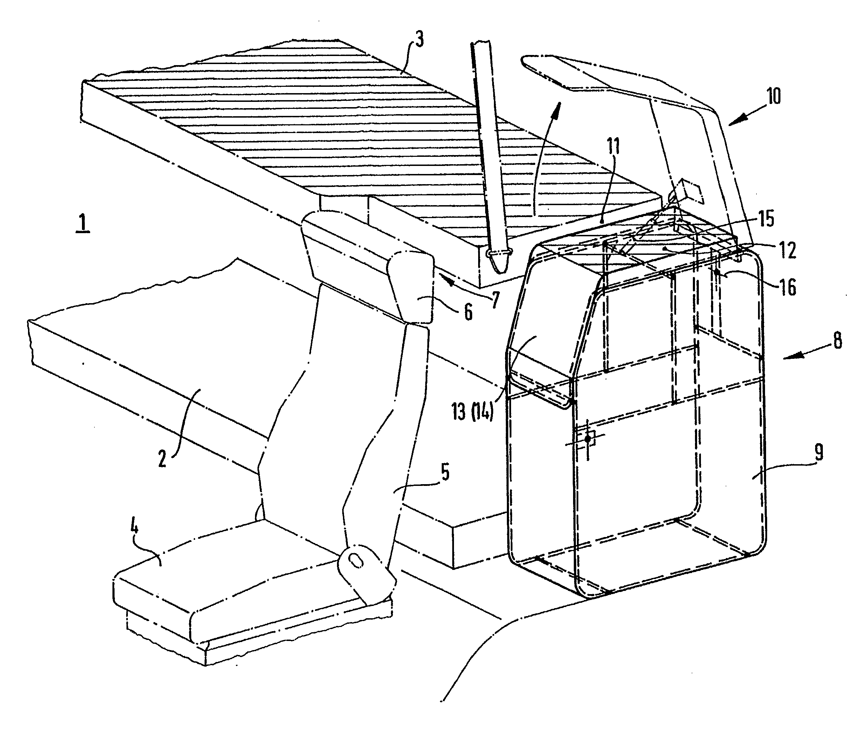

Weitere Vorteile und Merkmale der Erfindung sind den Ansprüchen, der Zeichnung und der Figurenbeschreibung zu entnehmen.

Die Erfindung ist in einem Ausführungsbeispiel in einer einzigen Figur dargestellt.

An der Rückwand des Lkw-Fahrerhauses 1 sind übereinander die Unterliege 2 und die Oberliege 3 klappbar angeordnet. Diese sind in der Figur im Nutzungszustand dargestellt. Die Oberliege 3 weist eine Aussparung 7 auf, in die die Kopfstütze 6 der Rückenlehne 5 des Fahrersitzes 4 in maximaler Rückwärtsposition eintauchen kann. Seitlich der Liegen 2, 3 ist der Kleiderbehälter 8 angeordnet. Dieser besteht aus einem Grundkörper 9 und einem in seinem rückwärtigen Bereich anlenkbaren Deckel 10, der sich wiederum aus einer zur Liege 4 im geschlossenen Zustand planparallelen Fläche 12, die sich nahtlos an das Fußende 11 der Oberliege 3 anschließt, und einer Schräge 13 zusammengesetzt, wobei die planparallele Fläche 12 den Grundkörper 9 von oben und Deckelschräge 13 die partielle Voröffnung 14 von vorne verschließt. Die planparallele Fläche ist oben mit Polstermaterial beschichtet. Zwischen Deckel 10 und einem Anlenkpunkt am Grundkörper 9 ist eine Feder 15, z.B. eine Gasfeder, so angeordnet, daß über Übertotpunktlage der Deckel 10 mit leichtem Handdruck zu öffnen oder zu schließen ist. Mittels Schnellverschlüsse, Schrauben 16 oder anderer Befestigungselemente kann der Kleiderbehälter 8 schnell an der Rückwand der Fahrerkabine befestigt werden, d.h., er ist leicht montier- oder demontierbar.

Der Kleiderbehälter kann als Rohrkonstruktion mit Stoffbespannung oder als Schalenkonstruktion, vorzugsweise aus Kunststoff, hergestellt werden. Zur vielseitigen Verwendung ist der Kleiderbehälter mit Traggriffen versehen und abschließbar ausgelegt, so daß die Fahrer ihn im Bedarfsfalle auch als tragbaren Koffer verwenden können.

## Patentansprüche

1. Lkw-Fahrerhaus mit im Rückraum angeordneter Schlafkabine, eine klappbare Unterliege und eine klappbare Oberliege aufweisend, wobei seitlich der Liegen (2, 3), direkt an diese anschließend, ein Kleiderbehälter (8) angeordnet ist, dadurch gekennzeichnet, daß der Kleiderbehälter aus einem Grundkörper (9) und einem diesen von oben verschließenden, aufklappbaren Deckel (10) besteht, wobei der Deckel (10) im geschlossenen Zustand, nahtlos an das Fußende (11) der oberen Liege (3) anschließend, angeordnet ist.

2. Lkw-Fahrerhaus nach Anspruch 1, dadurch gekennzeichnet, daß der Deckel (10) im geschlossenen Zustand eine zur oberen Liege (3) planparallele Fläche (12) mit einer sich daran anschließenden, nach unten weisenden Schräge (13) aufweist, die eine partielle Voröffnung (14) des Kleiderbehälters (8) verschließt.

3. Lkw-Fahrerhaus nach Anspruch 1 oder 2, dadurch gekennzeichnet, daß die Schräge (13) des Deckels (10) so gestaltet ist, daß sie die maximale rückwärtige Verstellposition des Fahrersitzes (4) gestattet.

4. Lkw-Fahrerhaus nach den Ansprüchen 1 bis 3, dadurch gekennzeichnet, daß der Deckel (10) durch Übertotpunktanordnung einer Feder (15), z.B. einer Gasfeder, mit geringem Kraftaufwand in Offen- oder Geschlossenstellung bringbar ist.

5. Lkw-Fahrerhaus nach einem oder mehreren der Ansprüche 1 bis 4, dadurch gekennzeichnet, daß durch die Deckeloberfläche die obere Schlafliege (3) über das vorgeschriebene Normmaß um 200 mm verlängert ist.

6. Lkw-Fahrerhaus nach einem oder mehreren der Ansprüche 1 bis 5, dadurch gekennzeichnet, daß die Deckeloberfläche gepolstert ist.

7. Lkw-Fahrerhaus nach einem oder mehreren der Ansprüche 1 bis 6, dadurch gekennzeichnet, daß der Kleiderbehälter (8) als ein mit Stoff bespanntes Rohrgestell ausgebildet ist.

8. Lkw-Fahrerhaus nach einem oder mehreren der Ansprüche 1 bis 6, dadurch gekennzeichnet, daß der Kleiderbehälter (8) als Schalenkonstruktion, vorzugsweise aus Kunststoff, ausgebildet ist.

9. Lkw-Fahrerhaus nach einem oder mehreren der Ansprüche 1 bis 6, dadurch gekennzeichnet, daß der Kleiderbehälter (8) aus einem Stück als Blasteil ausgebildet ist.

10. Lkw-Fahrerhaus nach einem oder mehreren der Ansprüche 1 bis 9, dadurch gekennzeichnet, daß der Kleiderbehälter (8) mittels Schnellverschlüsse oder zwei Schrauben (16) oder anderer Befestigungselemente zur Kabinenrückwand montierbar ist.

11. Lkw-Fahrerhaus nach einem oder mehreren der Ansprüche 1 bis 10, dadurch gekennzeichnet, daß das den Kleiderbehälter (8) bespannende Gewebe innenseitig plastifiziert ist.

12. Lkw-Fahrerhaus nach einem oder mehreren der Ansprüche 1 bis 11, dadurch gekennzeichnet, daß der Kleiderbehälter (8) mit Tragegriffen versehen und abschließbar gestaltet ist.

## Revendications

1. Cabine de camion comportant un compartiment à couchettes dans le volume arrière, avec une couchette inférieure, rabattable et une couchette supérieure rabattable, un vestiaire (8) étant prévu sur le côté des couchettes (2, 3), de manière directement adjacente à celles-ci, cabine caractérisée en ce que le vestiaire se compose d'un élément de base (9) et d'un couvercle (10), relevable fermant ce vestiaire par le haut, le couvercle (10) étant adjacent, à fleur du pied (11) de la couchette supérieure (13) lorsque le couvercle est en position de fermeture.

2. Cabine de camion selon la revendication 1, caractérisée en ce que le couvercle (10) présente à l'état fermé, une surface (12), plane parallèle à la couchette supérieure (3), avec de façon adjacente, une surface (13), inclinée, dirigée vers le bas, qui ferme une ouverture avant partielle (14) du vestiaire (8).

3. Cabine de camion selon la revendication 1 ou la revendication 2, caractérisée en ce que la surface inclinée (13) du couvercle (10) est formée pour permettre une position de déplacement arrière, maximale du siège de conducteur (4).

4. Cabine de concucteur selon les revendications 1 à 3, caractérisée en ce que le couvercle (10) peut être mis en position d'ouverture ou de fermeture, en exerçant une force faible, par exemple d'un ressort à gaz.

5. Cabine de camion selon l'une ou plusieurs des revendications 1 à 4, caractérisée en ce que la surface supérieure du couvercle prolonge la couchette supérieure (3) au-delà de la norme prescrite, d'environ 200 mm.

6. Cabine de conducteur selon l'une ou plusieurs des revendications 1 à 5, caractérisée en ce que la surface supérieure du couvercle est rembourrée.

7. Cabine de camion selon l'une ou plusieurs des revendications 1 à 6, caractérisée en ce que le vestiaire (8) est réalisé en forme d'un châssis tubulaire tendu avec de l'étoffe.

8. Cabine de camion selon l'une ou plusieurs des revendications 1 à 6, caractérisée en ce que le vestiaire (8) est réalisé en forme d'une structure à coquille de préférence en matière synthétique.

9. Cabine de camion selon l'une ou plusieurs des revendications 1 à 6, caractérisée en ce que le vestiaire (8) est réalisé sous la forme d'une pièce soufflée.

10. Cabine de camion selon l'une ou plusieurs des revendications 1 à 9, caractérisée en ce que le vestiaire (8) peut être monté par des moyens de fermeture rapide ou par deux vis (16) ou autres éléments de fixation sur la paroi arrière de la cabine.

11. Cabine de camion selon l'une ou plusieurs des revendications 1 à 10, caractérisée en ce que le tissu tendu formant le vestiaire (8) est plastifié sur sa face interne.

12. Cabine de camion selon l'une ou plusieurs des revendications 1 à 11, caractérisée en ce que le vestiaire (8) est muni de poignées et peut être fermé.

## Claims

1. A lorry driver's cab with a sleeping cabin arranged in the rear and having a folding lower bunk and a folding upper bunk, a wardrobe (8) being arranged laterally of the bunks (2, 3) directly adjacent thereto, characterized in that the wardrobe comprises a main body (9) and a foldable cover (10) closing the said body from above, the cover (10) being arranged adjacent the foot end (11) of the upper bunk (3) in a continuous manner in the closed state.

2. A lorry driver's cab according to Claim 1, characterized in that in the closed state the cover (10) has a planar face (12) parallel with the upper bunk (3) and a downwardly orientated slope (13) joined to the said face (12) and closing a partial front opening (14) of the wardrobe (8).

3. A lorry driver's cab according to Claim 1 or 2, characterized in that the slope (13) of the cover (10) is arranged in such a way that it permits the maximum backwards setting of the driver's seat (4).

4. A lorry driver's cab according to Claims 1 to 3, characterized in that the cover (10) can be brought into the open or closed position with little effort by the arrangement over top-dead centre of a spring (15), for example a gas spring.

5. A lorry driver's cab according to one or more of Claims 1 to 4, characterized in that on account of the cover surface the upper bunk (3) is extended by 200 mm over the prescribed standard measurement.

6. A lorry driver's cab according to one or more of Claims 1 to 5, characterized in that the cover surface is upholstered.

7. A lorry driver's cab according to one or more of Claims 1 to 6, characterized in that the wardrobe (8) is constructed as a tubular frame covered with fabric.

8. A lorry driver's cab according to one or more of Claims 1 to 6, characterized in that the wardrobe (8) is constructed as a shell structure, preferably of plastics material.

9. A lorry driver's cab according to one or more of Claims 1 to 6, characterized in that the wardrobe (8) is constructed in one piece as a blowmoulded component.

10. A lorry driver's cab according to one or more of Claims 1 to 9, characterized in that the wardrobe (8) can be mounted on the rear wall of the cab by means of snap-closure means or two bolts (16) or other fastening elements.

11. A lorry driver's cab according to one or more of Claims 1 to 10, characterized in that the fabric covering the wardrobe (8) is plasticized on the inside.

12. A lorry driver's cab according to one or more of Claims 1 to 11, characterized in that the wardrobe (8) is provided with carrying handles and is lockable.